# EUROPÄISCHE PATENTSCHRIFT

(11) **EP 3 115 316 B1**
(45) Veröffentlichungstag und Bekanntmachung des Hinweises auf die Patenterteilung: **04.04.2018**
(21) Anmeldenummer: 15175704.4
(22) Anmeldetag: 07.07.2015
(51) Int. Cl.: B65D 85/804, B29C 41/00, A23P 10/25

(54) **GETRÄNKEPULVER ENTHALTENDE KAPSEL, INSBESONDERE ZUR ZUBEREITUNG VON GEBRÜHTEM KAFFEE**
CAPSULE CONTAINING BEVERAGE POWDER, PARTICULARLY FOR PREPARING BREWED COFFEE
CAPSULE CONTENANT DE LA POUDRE POUR BOISSON, EN PARTICULIER DESTINÉE À LA PRÉPARATION DE CAFÉ

(43) Veröffentlichungstag der Anmeldung: 11.01.2017
(73) Patentinhaber: Swiss Coffee Innovation AG, 4600 Olten (CH)
(72) Erfinder: Nickel, Axel, 30966 Hemmingen (DE)
(74) Vertreter: Henkel, Breuer & Partner

(56) Entgegenhaltungen:
- EP-A2- 1 524 907
- EP-A2- 2 576 392
- GB-A- 762 700
- KR-A- 20140 112 339

## Beschreibung

Die vorliegende Erfindung betrifft eine Getränkepulver enthaltende Kapsel, welche insbesondere für die Zubereitung eines Getränkes, wie Kakao, Tee oder Kaffee, geeignet ist.

Bei der portionsweisen Zubereitung von Getränken, insbesondere von gebrühtem Kaffee, wurden in den vergangenen Jahren neben Kaffeepads zunehmend Kaffeekapseln verwendet, deren Kapselwände üblicherweise aus Edelstahl, Aluminium oder Kunststoff gefertigt sind. Solche Kapseln erlauben es, Kaffeepulver über einen längeren Zeitraum ohne Aromaverlust zu lagern. Zudem erlauben solche Kapseln eine schnelle und bedienerfreundliche Herstellung einer Kaffeeportion mit gewünschter Geschmacksrichtung, indem eine Kapsel mit gewünschter Kaffeesorte in eine daran angepasste Kaffeemaschine eingesetzt wird, in welcher dann heißes Wasser durch die Kapsel gepresst und daraus gebrühter Kaffee hergestellt wird. Allerdings sind derartige Kapseln unter anderem aufgrund des eingesetzten Kapselmaterials sowie der produktionsaufwendigen Kapselkonstruktion vergleichsweise teuer. Ferner sind derartige Kapseln umweltpolitisch problematisch. Zum einen sind die Kapseln nicht wiederverwertbar und werden vom Verbraucher nach dem Gebrauch in der Regel als Restmüll entsorgt. Ein Recycling von Kaffeekapseln findet daher praktisch nicht statt, was insbesondere bei Kaffeekapseln auf Aluminiumbasis bedenklich ist, da die Aluminiumherstellung sehr energieintensiv ist, wodurch sich bei solchen Kapseln eine besonders schlechte CO₂-Bilanz ergibt. Ein weiterer großer Nachteil ist, dass derartige Kapseln biologisch nicht abbaubar sind und somit auch nicht biologisch entsorgt werden können. In Anbetracht der Tatsache, dass allein in Deutschland pro Jahr weit über 2 Milliarden Kaffeekapseln verbraucht werden, ist dies ein ernstzunehmendes Problem.

Um die vorstehenden Probleme zumindest teilweise zu umgehen, sind bereits Kapseln aus alternativen Materialien vorgeschlagen worden. In der Entgegenhaltung EP 2576392 B1 wird eine Kapsel zur Zubereitung eines Getränkes aus Getränkepulver durch Einbringen von Wasser in die Kapsel offenbart, wobei die Kapsel Festkörper ("edible components") umfasst, wobei jeder Festkörper mit wenigstens einer Beschichtungsschicht ummantelt ist, wobei die wenigstens eine Beschichtungsschicht vorzugsweise Calciumalginat ist.

Aus der WO 2010/006979 A1 sind beispielsweise Kapseln bekannt, welche in ihrem Inneren mit Kaffee oder Tee gefüllt sind und eine Kapselwand umfassen, welche zusätzlich zu dem Kapselinhalt noch Wasser als Strukturierungskomponente enthält. Für das Ausbilden einer stabilen Kapselwand ist es jedoch erforderlich, dass die Kapsel unter den Gefrierpunkt der Strukturierungskomponente gekühlt wird, weil die Strukturierungskomponente bei einem Überschreiten deren Gefrierpunktes schmilzt und den Kapselinhalt befeuchtet. Dies beschränkt die Verwendung solcher Kapseln naturgemäß erheblich.

In der WO 2009/053811 A2 wird eine Kapsel beschrieben, die gemahlenen Kaffee, Cappuccinopulver, Schokoladenpulver, Milchpulver oder Teepulver enthalten kann. Die Kapsel umfasst zwei Halbschalen, welche die Kapselwände ausbilden. Dabei bestehen die Kapselwände aus einem in Wasser löslichen Material, das sich bei dem Brühvorgang auflöst. Bei diesem Konzept wird das Kapselwandmaterial während des Brühvorgangs aufgelöst und damit Bestandteil des zubereiteten Getränks, was den Geschmack unerwünscht beeinflussen kann. Abgesehen davon ist die Herstellung solcher Kapseln aufwendig und teuer.

In der Entgegenhaltung KR 2014/0112339 A wird ein Verfahren zur Herstellung eines Getränkes mit darin dispergierten Kapsel beschrieben, bei welchem zunächst ein Kernmaterial, welches fest oder auch flüssig sein kann, mit einer Calciumlösung vermischt wird, bevor die hierdurch erhaltene Mischung anschließend mit einer Natriumalginatlösung kontaktiert wird, um eine feste Kapselwand zu bilden.

Ausgehend davon liegt der vorliegenden Erfindung die Aufgabe zugrunde, eine Kapsel für die portionsweise Zubereitung von Getränken aus Getränkepulver, wie Kakao, Tee und Kaffee, bereit zu stellen, welche nicht nur einfach und kostengünstig herstellbar ist, sondern welche insbesondere auch biologisch abbaubar und daher umweltfreundlich zu entsorgen ist, den Kapselinhalt auch über einen längeren Zeitraum ohne nennenswerten Aromaverlust lagert und in entsprechend konstruierten Getränkeautomaten eingesetzt werden kann.

Erfindungsgemäß wird diese Aufgabe gelöst durch eine Kapsel zur Zubereitung eines Getränkes aus Getränkepulver durch Einbringen von Wasser in die Kapsel, wobei die Kapsel einen Pressling aus einem wenigstens ein Polysaccharid enthaltendem Pulver, wie insbesondere Kaffeepulver, umfasst, wobei der Pressling mit wenigstens einer Beschichtungsschicht ummantelt ist, wobei die wenigstens eine Beschichtungsschicht ein vernetztes Polysaccharid umfasst, wobei das vernetzte Polysaccharid durch Vernetzen eines Polysaccharids mit einem Vernetzungsmittel ohne die Verwendung eines polyolen Abstandshalters bzw. polyolen Spacers erhalten wurde bzw. erhältlich ist.

Diese Lösung basiert auf der Erkenntnis, dass eine derartige Kapsel aus einem Pressling aus einem wenigstens ein Polysaccharid enthaltendem Pulver, wie Kaffeepulver, wobei der Pressling mit wenigstens einer Beschichtungsschicht aus einem vernetzten Polysaccharid ummantelt ist, nicht nur alle notwendigen Eigenschaften aufweist, welche für deren Verwendung zur portionsweisen Zubereitung von Getränken, wie Kaffee, erforderlich sind, sondern insbesondere auch umweltfreundlich entsorgbar ist. Insbesondere ist die wenigstens eine Beschichtungsschicht aus einem vernetzten Polysaccharid stabil genug, um die Kapsel mit einem ausreichend hohen Transportschutz und Anfassschutz zu versehen. Abgesehen davon schützt die erfindungsgemäße Kapsel den Kapselinhalt auch über einen längeren Zeitraum, ohne dass ein nennenswerter Aromaverlust auftritt. Dies beruht auf einem synergistischen Zusammenwirken der wenigstens einen Beschichtungsschicht aus vernetztem Polysaccharid und dem Pressling. Durch das Pressen des Kaffeepulvers zu einem Pressling wird nämlich die Oberfläche des Kaffeepulvers, welche für Sauerstoff zugänglich ist, im Vergleich zu unverdichtetem Pulver deutlich verringert. Zudem wirkt die Ummantelung aus einem vernetzten Polysaccharid als zusätzliche Sauerstoffbarriere. Die Kombination der verringerten Oberfläche und der Ummantelung führt somit zu einer Konservierung des Aromas des Kapselinhalts. Ein weiterer Vorteil der erfindungsgemäßen Kapsel besteht darin, dass sich die wenigstens eine Beschichtungsschicht während der Getränkezubereitung nicht auflöst und somit keine Verfälschung des Geschmacks des zubereiteten Getränks verursacht. Abgesehen davon ist die erfindungsgemäße Kapsel einfach und kostengünstig herstellbar. Außerdem ist die erfindungsgemäße Kapsel leicht in Kugelform herstellbar und eignet sich somit hervorragend zur Verwendung in einem entsprechend angepassten Getränkeautomaten, da sie rollen kann. Besonders wesentlich ist zudem, dass die wenigstens eine Beschichtungsschicht aus vernetztem Polysaccharid vollständig biologisch abbaubar und daher umweltfreundlich zu entsorgen ist. Da Polysaccharide nicht fossilen Ursprungs sind und auch deren Gewinnung vergleichsweise wenig energieintensiv ist, weist die erfindungsgemäße Kapsel eine vorteilhafte CO₂-Bilanz auf.

Grundsätzlich ist die vorliegende Erfindung bezüglich der chemischen Natur des Polysaccharids der wenigstens einen Beschichtungsschicht nicht limitiert. Gute Ergebnisse werden insbesondere erhalten, wenn das Polysaccharid der wenigstens einen Beschichtungsschicht aus der Gruppe ausgewählt ist, welche aus Stärke, Cellulose, Chitin, Carrageen, Agar und Alginaten besteht. Besonders bevorzugt ist das Polysaccharid der wenigstens einen Beschichtungsschicht ein Carrageen oder ein Alginat, wobei es ganz besonders bevorzugt ist, dass das Polysaccharid der wenigstens einen Beschichtungsschicht ein Alginat ist. Im Rahmen der vorliegenden Erfindung wurde herausgefunden, dass diese Polysaccharide keine Verfälschung des Geschmacks während der Zubereitung des Getränks verursachen. Im Rahmen der vorliegenden Erfindung hat es sich zudem gezeigt, dass Presslinge, wie insbesondere solche aus Kaffeepulver, mit Alginat einfach und kostengünstig ummantelt werden können. Dabei sind Alginate biologisch abbaubar und liefern eine hinreichend stabile Ummantelung und schützen den Kapselinhalt, ohne dass ein nennenswerter Aromaverlust auftritt. Im Rahmen der vorliegenden Erfindung hat es sich ferner gezeigt, dass Alginate in der Lage sind, die Wasserhärte herabzusetzen. Ein unangenehmer Säuregeschmack wird dadurch abgemildert.

Erfindungswesentlich ist, dass das Polysaccharid der wenigstens einen Beschichtungsschicht vernetzt ist. Dabei kann die Vernetzung des Polysaccharids gemäß einer Ausführungsform der vorliegenden Erfindung über kovalente Bindungen erfolgen. Eine Vernetzung über kovalente Bindungen ermöglicht sehr beständige Ummantelungen. Dabei erfolgt die Vernetzung über kovalente Bindungen üblicherweise durch die Reaktion des Polysaccharids mit einem geeigneten Vernetzer. Als Vernetzer eignen sich insbesondere difunktionelle organische Verbindungen, wobei die funktionellen Gruppen beispielsweise aus der Gruppe ausgewählt sind, die aus Carbonsäuren, Salzen von Carbonsäuren, aktivierten Carbonsäuren, Aminen, Alkoholen, Aldehyden und Ketonen besteht. Unter aktivierten Carbonsäuren werden in diesem Zusammenhang Carbonsäurehalogenide, Aktivester von Carbonsäuren, Anhydride von Carbonsäuren oder andere reaktive Derivate von Carbonsäuren verstanden. Vorzugsweise wird die Vernetzung ohne die Verwendung eines Abstandshalters bzw. Spacers durchgeführt und insbesondere ohne einen polyolen Spacer durchgeführt.

Gemäß einer alternativen und besonders bevorzugten Ausführungsform der vorliegenden Erfindung ist das Polysaccharid der wenigstens einen Beschichtungsschicht über ionische und/oder koordinative Bindungen vernetzt. Derartige über ionische und/oder koordinative Bindungen vernetzte Polysaccharide lassen sich besonders einfach herstellen und beeinträchtigen nicht die biologische Abbaubarkeit des verwendeten Polysaccharids. Die ionische und/oder koordinative Vernetzung kann beispielsweise mittels Polysacchariden erreicht werden, welche anionische Gruppen, wie Carboxylatgruppen oder Sulfonatgruppen, aufweisen. Durch Einbringen zweiwertiger oder höherwertiger Kationen, insbesondere Erdalkalimetallionen, erfolgt dann eine ionische bzw. koordinative Vernetzung der anionischen Gruppen des Polysaccharids, um eine stabile ummantelnde Schicht auszubilden. Eine koordinative Bindung bezeichnet in diesem Zusammenhang eine Wechselwirkung zwischen einem Elektronenpaardonor und einem Elektronenpaarakzeptor, wie sie beispielsweise zwischen freien Elektronenpaaren von Sauerstoffatomen in Hydroxygruppen und Kationen stattfinden kann.

Ganz besonders bevorzugt handelt es sich bei dem vernetzten Polysaccharid um ein Erdalkalimetallalginat und höchst bevorzugt um ein Calciumalginat. In diesem Fall sind die Calciumionen der Vernetzer, da sie koordinative bzw. ionische Bindungen mit Gruppen des Alginats eingehen. Es wurde im Rahmen der vorliegenden Erfindung überraschenderweise herausgefunden, dass eine Ummantelung, welche Calciumalginat umfasst, eine wasserunlösliche Schicht bereitstellt, die den Geschmack des aus der Kapsel hergestellten Getränks nicht beeinträchtigt und eine ausreichende Stabilität der Kapsel bereitstellt, um einen Transport- und Anfassschutz sicherzustellen, ohne dass der Kapselinhalt einen nennenswerten Aromaverlust erleidet. Zudem ist Calciumalginat biologisch hervorragend abbaubar. Ein weiterer Vorteil ist, dass es sich bei Calciumalginat um einen zugelassenen Lebensmittelzusatzstoff mit der E-Nummer E405 handelt und daher gesundheitlich unbedenklich ist.

Grundsätzlich kann die erfindungsgemäße Kapsel lediglich eine Beschichtungsschicht aus vernetztem Polysaccharid umfassen. Um die Stabilität der Kapsel und somit die Transportsicherheit und den Anfassschutz zu erhöhen, wird es in Weiterbildung des Erfindungsgedankens vorgeschlagen, dass die erfindungsgemäße Kapsel zwei oder mehr Beschichtungsschichten umfasst. Vorzugsweise ist der Pressling der Kapsel mit 2 bis 100, besonders bevorzugt mit 2 bis 20, ganz besonders bevorzugt mit 2 bis 10 und höchst bevorzugt mit 2 bis 5 Beschichtungsschichten ummantelt. Durch die Ummantelung des Presslings der Kapsel mit zwei oder mehr Beschichtungsschichten wird auch die Wirkung der Beschichtung als Sauerstoffbarriere sowie die damit verbundene Bereitstellung eines wirksamen Aromaschutzes in besonders hohem Ausmaß erreicht.

Es hat sich gezeigt, dass die erste Beschichtungsschicht als Gel in die nach wie vor raue Oberfläche des Presslings einzieht und zu einer glatteren Oberfläche führt. Dies bedeutet eine weitere Oberflächenverringerung, was der Aromadichtheit weiter entgegen kommt. Mit weiteren Beschichtungsschichten wird dann eine noch glattere Oberfläche erreicht, die auch die notwendige Stabilität aufweist, so dass selbst härtere Stöße ohne beschädigende Wirkung bleiben.

Gemäß einer weiteren besonders bevorzugten Ausführungsform der vorliegenden Erfindung besteht die Beschichtung der Kapsel aus 2 bis 100, bevorzugt 2 bis 20, besonders bevorzugt 2 bis 10 und höchst bevorzugt 2 bis 5 den Pressling ummantelnden Calciumalginatschichten.

Die einzelnen Beschichtungsschichten weisen, je nach Viskosität der Natriumalginatlösung und dem eingesetzten Verfahren, Dicken zwischen 50 und 600 µm auf. Besonders bevorzugt sind Schichtdicken von 100 bis 300 µm für die erste Beschichtungsschicht anzusehen, da sie den optimalen Kompromiss zwischen Stabilität und Trocknungsgeschwindigkeit aufweisen. Nachfolgende Beschichtungsschichten sind vorzugsweise dünner und liegen bevorzugt zwischen 50 und 200 µm, um eine schnelle Trocknung zu ermöglichen.

Dabei ist eine dünne Beschichtungsschicht bevorzugt, um das im Gel enthaltene Wasser leichter zu entfernen, und, um ein möglichst schnelles Eindiffundieren des Vernetzungsmittels, d.h. der Calciumionen, in das Natriumalginat zu erleichtern. Prinzipiell ließe sich die Geschwindigkeit des Eindiffundierens der Calciumionen in das Natriumalginat auch durch eine höhere Konzentration des Vernetzungsmittels erhöhen; allerdings haben sich bei der praktischen Umsetzung dieser Variante dünne Beschichtungsdicken als vorteilhaft für die Geschwindigkeit des Eindiffundierens und die Handhabung erwiesen.

Bezüglich des Materials, aus welchem der Pressling der erfindungsgemäßen Kapsel zusammengesetzt ist, ist die vorliegende Erfindung nicht besonders limitiert. Gute Ergebnisse werden insbesondere erhalten, wenn der Pressling ein Material enthält oder bevorzugt aus einem Material zusammengesetzt ist bzw. besteht, welches aus der Gruppe ausgewählt ist, welche aus Kaffee, Tee, Trinkschokolade, Kakao und Milchpulver besteht. Gute Ergebnisse werden insbesondere erhalten, wenn der Pressling aus gemahlenem Kaffeepulver besteht.

Unter einem Pressling wird im Sinne der vorliegenden Erfindung verdichtetes Pulver verstanden. Gute Ergebnisse werden insbesondere erhalten, wenn der Pressling der erfindungsgemäßen Kapsel durch Pressen von Pulver, insbesondere Kaffeepulver, mit einem Druck von 1 bis 100 MPa, besonders bevorzugt mit einem Druck von 5 bis 50 MPa und ganz besonders bevorzugt mit einem Druck von 15 bis 30 MPa, hergestellt worden ist. Hierdurch ist eine ausreichende Verdichtung gegeben, damit eine sichere Ummantelung des Presslings vorgenommen werden kann und eine gute Sauerstoffbarriere erreicht wird. Bei niedrigeren Drücken gibt es keinen ausreichenden Zusammenhalt und bei höheren Drücken kommt es zu einer zu starken Verdichtung, die sich unter Umständen nach Entnahme aus der Presse wieder entspannt, was zu einer Zerstörung der Kapseln führen kann.

Ein weiterer Gegenstand der vorliegenden Erfindung ist eine Kapsel, die einen Pressling aus einem Pulver aus einer Substanz ausgewählt aus der Gruppe bestehend aus Kaffee, Tee, Trinkschokolade, Kakao und Milchpulver enthält, wobei der Pressling durch Pressen des Pulvers mit einem Druck von 1 bis 100 MPa, besonders bevorzugt mit einem Druck von 5 bis 50 MPa und ganz besonders bevorzugt mit einem Druck von 15 bis 30 MPa, erhalten worden ist, und, wobei der Pressling mit 1 bis 100, bevorzugt mit 2 bis 20, besonders bevorzugt mit 2 bis 10 und höchst bevorzugt mit 2 bis 5 Beschichtungsschichten aus Calciumalginat ummantelt ist. Höchst bevorzugt besteht die erfindungsgemäße Kapsel aus einem Pressling aus einem Pulver aus einer Substanz ausgewählt aus der Gruppe bestehend aus Kaffee, Tee, Trinkschokolade, Kakao und Milchpulver, wobei der Pressling durch Pressen des Pulver mit einem Druck von 15 bis 30 MPa erhalten worden ist, und, wobei der Pressling mit 2 bis 20 Beschichtungsschichten aus Calciumalginat ummantelt ist.

Grundsätzlich kann der Pressling eine beliebige Form aufweisen, wie beispielsweise die Form eines Kegelstumpfs, Kegels, Ellipsoids, Zylinders, Quaders, einer Kaffeebohne oder einer Kugel. Besonders bevorzugt weist die erfindungsgemäße Kapsel die Form einer Kugel auf, da hierdurch das Verhältnis von Oberfläche zu Volumen am geringsten ist, wodurch das Aroma besonders gut konserviert wird. Zudem ermöglicht es die Kugelform, dass die Kapsel rollen kann und somit besonders gut in einem Getränkeautomat eingesetzt werden kann.

Ein weiterer Gegenstand der vorliegenden Erfindung ist ein Verfahren zur Herstellung einer Kapsel, welches die folgenden Schritte umfasst:
i) Bereitstellen eines Presslings aus einem wenigstens ein Polysaccharid enthaltendem Pulver,
ii) in Kontakt bringen wenigstens eines Teils der Oberfläche und vorzugsweise der gesamten Oberfläche des in dem Schritt i) erhaltenen Presslings mit einer Lösung eines Polysaccharids in einem Lösungsmittel oder mit einer Dispersion eines Polysaccharids in einem Dispergiermittel,
iii) ggf. Entnehmen des Presslings aus der Lösung oder der Dispersion des Schritts ii),
iv) in Kontakt bringen des in dem Schritt ii) oder iii) erhaltenen Presslings mit wenigstens einem Vernetzungsmittel,
v) ggf. Entnehmen des Presslings aus der Lösung des Schritts iv) und
vi) Trocknen des in dem Schritt iv) oder v) erhaltenen Presslings.

Das in Kontakt bringen des Presslings in dem Schritt ii) wird vorzugsweise so durchgeführt, dass wenigstens ein Teil der Oberfläche und vorzugsweise die gesamte Oberfläche des Presslings mit der Lösung oder der Dispersion des Polysaccharids benetzet wird. Beispielsweise erfolgt das in Kontakt bringen des Presslings in den Schritten ii) und iv) unabhängig voneinander durch Eintauchen, Besprühen oder Überziehen des Presslings mit der Lösung oder der Dispersion des Polysaccharids bzw. mit dem Vernetzungsmittel.

Das erfindungsgemäße Verfahren ermöglicht es, den Pressling gleichmäßig zu ummanteln, und zwar insbesondere auch dann, wenn der Pressling kugelförmig ist, ohne dass ein Rand oder eine Nahtstelle entsteht.

Bei dem Lösungsmittel oder Dispergiermittel handelt es sich bevorzugt um ein wasserbasiertes Lösungsmittel oder Dispergiermittel. Besonders bevorzugt handelt es sich bei dem Lösungsmittel oder Dispergiermittel um Wasser.

Bevorzugt wird der Pressling in dem Schritt ii) in eine wässrige 0,5 bis 5 gew.-%-ige Alkalimetallalginatlösung eingetaucht oder damit besprüht. Besonders bevorzugt wird der Pressling in dem Schritt ii) in eine wässrige 1 bis 2 gew.-%-ige Alkalimetallalginatlösung eingetaucht oder damit besprüht. Bei einer Konzentration von weniger als 0,5 Gew.-% ist die Alkalimetallalginatlösung nicht konzentriert genug und zu niederviskos, um bei einem einfachen Eintauchen oder Besprühen eine ausreichende Menge Alkalimetallalginat auf dem Pressling aufzubringen, um in den nachfolgenden Schritten eine ausreichend stabile Ummantelung herzustellen. Übersteigt die Konzentration des Alkalimetallalginats 5 Gew.-%, ist die Viskosität der Alkalimetallalginatlösung so hoch, dass die Ausbildung einer vollständigen Ummantelung erschwert ist. Zudem nehmen die Beschichtungsdicken bei einer Konzentration des Alkalimetallalginats von über 5 Gew.-% zu, wodurch die Trocknung erschwert wird.

Bei der Alkalimetallalginatlösung handelt es sich bevorzugt um eine Lösung eines Salzes, das aus Alginat und einem Kation eines Alkalimetalls oder eines verwandten Kations, wie beispielsweise einem Ammoniumion, besteht. Besonders bevorzugt handelt es sich bei der Alkalimetallalginatlösung um eine wässrige Lösung von Natriumalginat, Kaliumalginat oder Ammoniumalginat. Bei Natriumalginat, Kaliumalginat und Ammoniumalginat handelt es sich um zugelassene Lebensmittelzusatzstoffe mit den E-Nummern E401, E402 bzw. E403. Derartige Ummantelungen sind ohne Bedenken im Lebensmittelbereich einsetzbar. Ganz besonders bevorzugt handelt es sich um eine wässrige Lösung von Natriumalginat.

Bei dem Verfahren der vorliegenden Erfindung ist es bevorzugt, den Pressling in dem Schritt iv) in eine wässrige 1 bis 15 gew.-%-ige, bevorzugt 1 bis 7 gew.-%-ige Erdalkalimetallsalzlösung einzutauchen oder damit zu besprühen. Bei einer Erdalkalimetallsalz Konzentration zwischen 1 bis 15 gew.-%-ige, bevorzugt zwischen 1 bis 7 Gew.-% lässt sich eine schnelle ionische Vernetzung des Polysaccharids erreichen. Bei dem Erdalkalimetallsalz handelt es sich vorzugsweise um ein Calciumsalz, wie insbesondere um Calciumchlorid.

Um einen Pressling mit mehreren Schichten zu ummanteln, können die Schritte ii) bis v) oder die Schritte ii) bis vi) mehrfach wiederholt werden, und zwar bevorzugt 2- bis 20-mal, besonders bevorzugt 2- bis 10-mal und höchst bevorzugt 2 bis 5 mal.

Die Trocknung in dem Schritt vi) kann auf unterschiedliche Weise erfolgen, wobei sich verschiedene Trocknungsverfahren bewährt haben. Ein sehr gleichmäßiges Trocknen kann unter anderem, aber nicht ausschließlich, durch Trocknen im Luftstrom in geeigneten Kanälen erzielt werden, wobei der Pressling frei schwebt und gleichmäßig durch Eigendrehung trocknet. Um das durch die sich ausbildende Beschichtungsschicht ausdiffundierende Wasser besser aufnehmen zu können, hat sich auch eine Kontakttrocknung an aufsaugenden oder warmen Oberflächen bewährt. Beide Prinzipien lassen sich in einer Art Schwebebettrinne kombinieren. Als weitere sehr effiziente Trocknungsprinzipien können auch Infrarottrockner und Mikrowellentrockner eingesetzt werden.

Ein weiterer Gegenstand der vorliegenden Erfindung ist die Verwendung der erfindungsgemäßen Kapsel zum Herstellen eines Getränks durch in Kontakt bringen der erfindungsgemäßen Kapsel mit Wasser. Vorzugsweise enthält die Kapsel ein Material, welches aus der Gruppe ausgewählt ist, welche aus Kaffee, Tee, Trinkschokolade, Kakao und Milchpulver besteht.

Die Verwendung der erfindungsgemäßen Kapsel zur Herstellung eines Kaffeegetränks erlaubt die portionsweise Zubereitung des Getränks je nach anfallendem Bedarf. Ein besonderer Vorteil der erfindungsgemäßen Verwendung ist, dass nur biologisch abbaubarerer Abfall entsteht.

Bei der Verwendung der erfindungsgemäßen Kapsel zur Zubereitung eines Getränkes, insbesondere Kaffeegetränkes, wird die Kaffeekapsel bevorzugt zerdrückt oder perforiert, bevor anschließend eine Extraktion der zerdrückten bzw. perforierten Kaffeekapsel mit Wasser erfolgt.

Nachfolgend wird die vorliegende Erfindung anhand zweier die Erfindung illustrierenden, aber nicht einschränkenden Beispiele erläutert.

### Beispiel 1

8 g gemahlener Röstkaffee wurden mit einer Presse bei einem Druck von 20 MPa zu einem kugelförmigen Pressling verpresst. Der erhaltene kugelförmige Pressling wurde in eine 1 gew.%-ige wässrige Natriumalginatlösung getaucht und nach 1 bis 2 Sekunden wieder aus der Natriumalginatlösung entnommen. Nach der Entnahme des Presslings aus der Natriumalginatlösung wurde dieser mit einer 5 gew.-%-igen CaCl₂ Lösung besprüht. Anschließend wurde der Pressling für 10 Minuten bei Raumtemperatur im Luftstrom getrocknet.

Es wurde eine aus einem Pressling mit einer ummantelnden Schicht aus Calciumalginat bestehende Kapsel erhalten.

### Beispiel 2

Es wurde eine Kaffeekapsel wie in dem Beispiel 1 hergestellt, ausgenommen, dass die Schritte des Eintauchens des Presslings in die Natriumalginatlösung, des Herausnehmens aus der Natriumalginatlösung, des Besprühens mit der Calciumchloridlösung sowie des Trocknens nacheinander jeweils insgesamt 5 mal vorgenommen worden sind.

Es wurde eine aus einem Pressling mit fünf ummantelnden Schichten aus Calciumalginat bestehende Kapsel erhalten.

## Patentansprüche

1. Kapsel zur Zubereitung eines Getränkes aus Getränkepulver durch Einbringen von Wasser in die Kapsel, wobei die Kapsel einen Pressling aus einem wenigstens ein Polysaccharid enthaltendem Pulver umfasst, wobei der Pressling mit wenigstens einer Beschichtungsschicht ummantelt ist, wobei die wenigstens eine Beschichtungsschicht ein vernetztes Polysaccharid umfasst, wobei das vernetzte Polysaccharid durch Vernetzen eines Polysaccharids mit einem Vernetzungsmittel ohne die Verwendung eines polyolen Abstandshalters erhalten wurde.

2. Kapsel nach Anspruch 1, **dadurch gekennzeichnet, dass** das Polysaccharid der wenigstens einen Beschichtungsschicht aus der Gruppe ausgewählt ist, welche aus Stärke, Cellulose, Chitin, Carrageen, Agar und Alginaten besteht.

3. Kapsel nach Anspruch 2, **dadurch gekennzeichnet, dass** das Polysaccharid der wenigstens einen Beschichtungsschicht ein Alginat ist.

4. Kapsel nach einem der vorstehenden Ansprüche, **dadurch gekennzeichnet, dass** das Polysaccharid der wenigstens einen Beschichtungsschicht über kovalente Bindungen vernetzt ist.

5. Kapsel nach einem der Ansprüche 1 bis 3, **dadurch gekennzeichnet, dass** das Polysaccharid der wenigstens einen Beschichtungsschicht über ionische und/oder koordinative Bindungen vernetzt ist.

6. Kapsel nach Anspruch 5, **dadurch gekennzeichnet, dass** das vernetzte Polysaccharid der wenigstens einen Beschichtungsschicht ein Erdalkalimetallalginat ist.

7. Kapsel nach einem der vorstehenden Ansprüche, **dadurch gekennzeichnet, dass** der Pressling mit 1 bis 100 Beschichtungsschichten ummantelt ist.

8. Kapsel nach einem der Ansprüche 3, 6 oder 7, **dadurch gekennzeichnet, dass** der Pressling mit 2 bis 100 Beschichtungsschichten aus Calciumalginat ummantelt ist.

9. Kapsel nach einem der vorstehenden Ansprüche, **dadurch gekennzeichnet, dass** der Pressling ein Material enthält, welches aus der Gruppe ausgewählt ist, welche aus Kaffee, Tee, Trinkschokolade, Kakao und Milchpulver besteht.

10. Kapsel nach einem der vorstehenden Ansprüche, **dadurch gekennzeichnet, dass** der Pressling durch Pressen von Pulver mit einem Druck von 1 bis 100 MPa erhältlich ist.

11. Kapsel nach Anspruch 1, **dadurch gekennzeichnet, dass** die Kapsel einen Pressling aus einem Pulver aus einer Substanz ausgewählt aus der Gruppe bestehend aus Kaffee, Tee, Trinkschokolade, Kakao und Milchpulver umfasst, wobei der Pressling durch Pressen des Pulver mit einem Druck von 1 bis 100 MPa erhalten worden ist, und wobei der Pressling mit 1 bis 100 Beschichtungsschichten aus Calciumalginat ummantelt ist.

12. Verfahren zum Herstellen einer Kapsel nach einem der vorstehenden Ansprüche, welches die folgenden Schritte umfasst:
i) Bereitstellen eines Presslings aus einem wenigstens ein Polysaccharid enthaltendem Pulver,
ii) in Kontakt bringen wenigstens eines Teils des in dem Schritt i) erhaltenen Presslings mit einer Lösung eines Polysaccharids in einem Lösungsmittel oder mit einer Dispersion eines Polysaccharids in einem Dispergiermittel,
iii) ggf. Entnehmen des Presslings aus der Lösung oder der Dispersion des Schritts ii),
iv) in Kontakt bringen des in dem Schritt ii) oder iii) erhaltenen Presslings mit wenigstens einem Vernetzungsmittel,
v) ggf. Entnehmen des Presslings aus der Lösung des Schritts iv) und
vi) Trocknen des in dem Schritt iv) oder v) erhaltenen Presslings.

13. Verfahren nach Anspruch 12, **dadurch gekennzeichnet, dass** der Pressling in dem Schritt ii) in eine Alkalimetallalginatlösung eingetaucht oder damit besprüht wird.

14. Verfahren nach Anspruch 12 oder 13, **dadurch gekennzeichnet, dass** der Pressling in dem Schritt iv) in eine Erdalkalimetallsalzlösung eingetaucht oder damit besprüht wird.

15. Verwendung einer Kapsel, nach einem der Ansprüche 1 bis 11, zum Herstellen eines Kaffeegetränks.

## Claims

1. Capsule for preparing a beverage from beverage powder by introducing water into the capsule, which capsule comprises a pressed article composed of a powder containing at least one polysaccharide, wherein the pressed article is coated with at least one coating layer, wherein the at least one coating layer comprises a cross-linked polysaccharide, wherein the cross-linked polysaccharide was obtained by crosslinking a polysaccharide by means of a cross-linking agent without using a polyol spacer.

2. Capsule according to claim 1, **characterized in that** the polysaccharide of the at least one coating layer is chosen from the group containing starch, cellulose, chitin, carrageenan, agar and alginates.

3. Capsule according to claim 2, **characterized in that** the polysaccharide of the at least one coating layer is an alginate.

4. Capsule according to any of the foregoing claims, **characterized in that** the polysaccharide of the at least one coating layer is cross-linked by covalent bonds.

5. Capsule according to any of the claims 1 to 3, **characterized in that** the polysaccharide of the at least one coating layer is cross-linked through ionic and/or coordinate bonds.

6. Capsule according to claim 5, **characterized in that** the cross-linked polysaccharide of the at least one coating layer is an alkaline earth metal alginate.

7. Capsule according to any of the foregoing claims, **characterized in that** the pressed article is coated with 1 to 100 coating layers.

8. Capsule according to any of the claims 3, 6 or 7, **characterized in that** the pressed article is coated with 2 to 100 coating layers consisting of calcium alginate.

9. Capsule according to any of the foregoing claims, **characterized in that** the pressed article comprises a material selected from the group containing coffee, tea, drinking chocolate, cocoa and milk powder.

10. Capsule according to any of the foregoing claims, **characterized in that** the pressed article can be obtained by pressing powder with a pressure of 1 to 100 MPa.

11. Capsule according to claim 1, **characterized in that** the capsule comprises a pressed article composed of a powder made of a substance selected from the group consisting of coffee, tea, drinking chocolate, cocoa and milk powder, wherein the pressed article was obtained by pressing the powder with a pressure of 1 to 100 MPa, and wherein the pressed article is coated with 1 to 100 coating layers consisting of calcium alginate.

12. Method for producing a capsule according to any of the foregoing claims comprising the following steps:
i) providing a pressed article composed of a powder containing at least one polysaccharide,
ii) bringing at least part of the pressed article obtained in step i) in contact with a solution of a polysaccharide in a solvent or with a dispersion of a polysaccharide in a dispersant,
iii) possibly removing the pressed article from the solution or the dispersion of step ii),
iv) bringing the pressed article contained in step ii) or iii) in contact with at least one cross-linking agent,
v) possibly removing the pressed article from the solution of step iv), and
vi) drying the pressed article obtained in step iv) or v).

13. Method according to claim 12, **characterized in that** in step ii) the pressed article is immersed in an alkali metal alginate solution or is sprayed with it.

14. Method according to claim 12 or 13, **characterized in that** in step iv) the pressed article is immersed in an alkaline earth metal saline solution or is sprayed with it.

15. Use of a capsule according to any of the claims 1 to 11 for preparing a coffee beverage.

## Revendications

1. Capsule destinée à la préparation d'une boisson à partir d'une poudre pour boisson par injection d'eau dans la capsule, la capsule comprenant un comprimé d'une poudre contenant au moins un polysaccharide,
dans laquelle le comprimé est enveloppé d'au moins une couche de revêtement, ladite au moins une couche de revêtement contient un polysaccharide réticulé, le polysaccharide réticulé est obtenu par réticulation d'un polysaccharide avec un réticulant sans utiliser un élément écarteur de polyol.

2. Capsule selon la revendication 1,
**caractérisée en ce que**
le polysaccharide de ladite au moins une couche de revêtement est choisi parmi le groupe comprenant l'amidon, la cellulose, la chitine, le carraghénane, l'agar et l'alginate.

3. Capsule selon la revendication 2,
**caractérisée en ce que**
le polysaccharide de ladite au moins une couche de revêtement est un alginate.

4. Capsule selon l'une des revendications précédentes,
**caractérisée en ce que**
le polysaccharide de ladite au moins une couche de revêtement est réticulé par des liaisons covalentes.

5. Capsule selon l'une des revendications 1 à 3,
**caractérisée en ce que**
le polysaccharide de ladite au moins une couche de revêtement est réticulé par des liaisons ioniques et/ou par des liaisons de coordination.

6. Capsule selon la revendication 5,
**caractérisée en ce que**
le polysaccharide réticulé de ladite au moins une couche de revêtement est un alginate de métal alcalino-terreux.

7. Capsule selon l'une des revendications précédentes,
**caractérisée en ce que**
le comprimé est enveloppé de 1 à 100 couches de revêtement.

8. Capsule selon l'une des revendications 3, 6 ou 7,
**caractérisée en ce que**
le comprimé est enveloppé de 2 à 100 couches de revêtement en alginate de calcium.

9. Capsule selon l'une des revendications précédentes,
**caractérisée en ce que**
le comprimé contient un matériau qui est choisi parmi le groupe comprenant le café, le thé, le chocolat à boire, le cacao et la poudre de lait.

10. Capsule selon l'une des revendications précédentes,
**caractérisée en ce que**
le comprimé peut être obtenu par compression de poudre à une pression de 1 à 100 MPa.

11. Capsule selon la revendication 1,
**caractérisée en ce que**
la capsule comprend un comprimé d'une poudre d'une substance choisie parmi le groupe comprenant le café, le thé, le chocolat à boire, le cacao et la poudre de lait, le comprimé ayant été obtenu par compression de la poudre à une pression de 1 à 100 MPa, et le comprimé étant enveloppé de 1 à 100 couches de revêtement en alginate de calcium.

12. Procédé pour produire une capsule selon l'une des revendications précédentes, comprenant les étapes suivantes consistant à :
i) fournir un comprimé d'une poudre contenant au moins un polysaccharide,
ii) mettre en contact au moins une partie du comprimé obtenu dans l'étape i) avec une solution d'un polysaccharide dans un solvant ou avec une dispersion d'un polysaccharide dans un dispersant,
iii) le cas échéant prélever le comprimé hors de la solution ou de la dispersion de l'étape ii),
iv) mettre en contact le comprimé obtenu dans l'étape ii) ou iii) avec au moins un réticulant,
v) le cas échéant prélever le comprimé hors de la solution de l'étape iv), et
vi) sécher le comprimé obtenu dans l'étape iv) ou v).

13. Procédé selon la revendication 12,
**caractérisé en ce que**
dans l'étape ii), le comprimé est immergé dans une solution d'alginate de métal alcalin ou bien il est arrosé de celle-ci.

14. Procédé selon la revendication 12 ou 13,
**caractérisé en ce que**
dans l'étape iv), le comprimé est immergé dans une solution de sel de métal alcalino-terreux ou bien il est arrosé de celle-ci.

15. Utilisation d'une capsule selon l'une des revendications 1 à 11 pour préparer une boisson à base de café,
